# EUROPÄISCHE PATENTSCHRIFT

(11) **EP 3 020 261 B1**
(45) Veröffentlichungstag und Bekanntmachung des Hinweises auf die Patenterteilung: **18.07.2018**
(21) Anmeldenummer: 15192781.1
(22) Anmeldetag: 03.11.2015
(51) Int. Cl.: A01B 63/11, A01C 7/00

(54) **KOMBINATION AUS EINEM LANDWIRTSCHAFTLICHEN ZUGFAHRZEUG UND EINER DIREKTSAAT-SÄMASCHINE**
COMBINATION OF AN AGRICULTURAL TOWING VEHICLE AND A MINIMUM TILL SEEDER
COMBINAISON D'UN VEHICULE DE TRACTION AGRICOLE ET D'UN SEMOIR DIRECT

(30) Priorität: 12.11.2014 DE 102014223095
(43) Veröffentlichungstag der Anmeldung: 18.05.2016
(73) Patentinhaber: Deere & Company, Moline, IL 61265 (US)
(72) Erfinder: Rylander, Dave J., Victoria, IL 61485 (US); Gresch, Valentin, 67655 Kaiserslautern (DE); Kremmer, Martin, 68163 Mannheim (DE); Waibel, Christian, 68163 Mannheim (DE)
(74) Vertreter: Holst, Sönke

(56) Entgegenhaltungen:
- EP-A2- 0 632 953
- WO-A1-2009/134144
- US-B1- 6 389 999

## Beschreibung

Die Erfindung betrifft eine Kombination aus einem Ackerschlepper und einer am Ackerschlepper angebrachten, zur Direktsaat geeigneten Sämaschine.

### Stand der Technik

Zur Direktsaat geeignete Sämaschinen, die zum Säen auf nicht zuvor durch Bodenbearbeitungsgeräte vorbereiteten Feldern ausgelegt sind, auf denen noch nach vorhergegangenen Erntevorgängen verbliebene Pflanzenstoppeln und andere Verunreinigungen vorhanden sind, bedürfen hinreichend großer Andruckkräfte für ihre Furchenöffner. Diese Andruckkräfte werden benötigt, um eine hinreichend tiefe Saatgutfurche und ggf. eine Düngemittelfurche zu erzeugen und die auf dem Feld vorhandenen Pflanzenteile und andere Materialien mit hinreichender Sicherheit zur Seite zu räumen oder zu durchtrennen.

Im Stand der Technik (vgl. beispielsweise EP 2 517 545 A1) sind derartige, zur Direktsaat geeignete Sämaschinen mit einem eigenen Rahmen ausgestattet, der sich auf Rädern abstützt und durch ein Zugfahrzeug (in der Regel ein Ackerschlepper) über das Feld gezogen wird. Auf dem Rahmen ist ein Saatgutbehälter angebracht, der einzelne, am Rahmen abgestützte Säeinheiten mit Saatgut versorgt. Der Saatguttransport vom Saatgutbehälter zu den Säeinheiten erfolgt pneumatisch. Die Sämaschine hat ein derart hohes Eigengewicht, dass es kein Problem bereitet, die zum Einbringen der Furche in den Boden erforderlichen Kräfte durch Federn und/oder hydraulische oder pneumatische Aktoren bereitzustellen, die zwischen dem Furchenöffner (oder einer Säeinheit, an welcher der Furchenöffner befestigt ist) und dem Rahmen angeordnet sind. Die zum Öffnen der Furche benötigte Kraft wird durch die Feder bzw. den Aktor auf den Rahmen der Sämaschine übertragen.

Die DD 204 827 A1 beschreibt eine an der Dreipunktkupplung des Ackerschleppers angebrachte Anbausämaschine mit federkraftbelasteten Säscharen. Das Gewicht der Sämaschine wird beim Sävorgang von Rädern der Sämaschine getragen. Zur Erhöhung der Belastung der Vorderräder des Ackerschleppers beim Wendevorgang oder zur Verstellung der Andruckkraft der Säschare kann die Sämaschine gegenüber der Dreipunktkupplung durch einen Hydraulikzylinder nach vorn und oben verschwenkt werden. Hier wird die Andruckkraft der (nicht ausdrücklich für die Direktsaat geeigneten) Säschare ebenfalls durch das Eigengewicht der Sämaschine bereitgestellt.

Die DE 31 24 737 C1 zeigt eine Drillmaschine, die einen am Dreipunktrahmen eines Traktors anbringbaren Lagerarm umfasst. An dem Lagerarm ist eine quer verlaufende Trägerwelle drehbar abgestützt, an welcher seitlich nebeneinander angeordnete, jeweils eine Furche schneidende Säschare tragende Hebelarme durch Torsionsfedern drehbar abgestützt sind. Die Trägerwelle wird durch eine Zugfeder mit einem die Säschare in den Boden drückenden Moment beaufschlagt, dem zur Verbesserung der Furchenbildung noch durch einen geeigneten Antrieb eine Vibration überlagert wird. Zum Ausheben der Drillmaschine wird der Dreipunktrahmen angehoben und zum Säbetrieb abgesenkt. Diese Drillmaschine erfordert eine Vorlockerung des Bodens bis in eine Tiefe von 60 mm, ist somit nicht zur Direktsaat geeignet.

Die als gattungsbildend angesehene WO 2009/134144 A1 beschreibt eine Kombination aus einem Ackerschlepper und einer Sämaschine, deren Reiheneinheiten an einem Querträger schwenkbar angelenkt sind und durch jeweils einen druckbeaufschlagten, doppeltwirkenden Zylinder aushebbar sind. Alle Zylinder sind parallel geschaltet und werden im Betrieb durch einen Druckspeicher, eine Pumpe und Ventile mit Druck beaufschlagt, um die Reiheneinheiten nach unten zu drücken. Der Querträger ist an einer Dreipunktkupplung angebracht, deren Unterlenker durch einen weiteren Zylinder nach unten gedrückt wird. Ein Kraftsensor erfasst die auf einen zwei Tiefeneinstellräder tragenden Rahmen einwirkende Stützkraft und regelt den Druck im weiteren Zylinder. Die Regelung der Andruckkraft der Tiefeneinstellräder erfolgt somit durch den weiteren Zylinder für den gesamten Querträger, was aufgrund von dessen großer Masse relativ träge Antwortzeiten mit sich bringt.

### Aufgabe

Es wäre wünschenswert, eine verbesserte Sämaschine bereitzustellen.

### Lösung

Dieses Problem wird erfindungsgemäß durch die Lehre des Patentanspruches 1 gelöst, wobei in dem weiteren Patentanspruch Merkmale aufgeführt sind, die die Lösung in vorteilhafter Weise weiterentwickeln.

Eine Kombination setzt sich aus einem Ackerschlepper und einer an einer Dreipunktkupplung des Ackerschleppers angebrachten, zur Direktsaat geeigneten Sämaschine zusammen. Die Sämaschine weist einen mit der Dreipunktkupplung verbundenen Querträger auf, an dem mehrere Säeinheiten seitlich nebeneinander angebracht sind. Die jeweils mit mindestens einem Furchenöffner ausgestatteten Säeinheiten sind gegenüber dem Querträger durch zugeordnete Vorspannmittel nach unten vorgespannt. Die Dreipunktkupplung ist gegenüber einem Fahrgestell des Ackerschleppers in sich arretiert.

Die Dreipunktkupplung umfasst einen mittels eines doppelt wirkenden Hydraulikzylinders höhenverstellbaren Unterlenker und der Hydraulikzylinder ist im Säbetrieb durch ein Ventil in sich blockierbar.

Die Sämaschine stützt sich nur an der Dreipunktkupplung und ggf. Tiefeneinstellrädern der Säeinheiten, jedoch nicht auf der Sämaschine zugeordneten Stützrädern auf dem Erdboden ab.

Die Säeinheiten umfassen jeweils ein Gestell, an dem ein Saatgutbehälter, der Furchenöffner, ein Tiefeneinstellrad, ein Säschar und eine Zumesseinrichtung angebracht ist, wobei die Zumesseinrichtung eingerichtet ist, sukzessive Saatgut aus dem Saatgutbehälter zu entnehmen und dem Säschar zuzuführen, welches es in eine durch den Furchenöffner erzeugte Furche abgibt, deren Tiefe durch das Tiefeneinstellrad vorgegeben wird.

Auf diese Weise erreicht man, dass beim Säbetrieb die Andruckkräfte der Furchenöffner über die Säeinheiten, das Gestell, die Vorspannmittel, den Querträger und die Dreipunktkupplung in das Fahrgestell des Ackerschleppers eingeleitet werden. Die für die Direktsaat, d.h. zum Säen auf nicht zuvor durch Bodenbearbeitungsgeräte vorbereiteten Feldern geeignete Sämaschine nutzt somit das Gewicht des Ackerschleppers zur Bereitstellung der Andruckkraft der Furchenöffner aus, sodass das Eigengewicht der Sämaschine relativ gering bleiben kann. Die hier erwähnten Vorspannmittel umfassen einen druckmittelbetätigten Aktor in Form eines pneumatischen, mit vorbestimmbarem Druck beaufschlagbaren Zylinders bzw. pneumatischen (Balg-) Zylinders. Die durch den pneumatischen Aktor vorgegebene Andruckkraft des Furchenöffners ist mittels einer durch einen Bediener aus einer Kabine des Ackerschleppers über eine Schnittstelle und eine Busleitung kontrollierbaren pneumatischen Kontrolleinrichtung oder eine Automatik zur Anpassung an die jeweiligen Gegebenheiten auf dem Feld veränderbar.

Das Gestell kann durch ein zwei Lenker umfassendes, verstellbares Parallelogramm am Querträger befestigt und die Vorspannmittel am Parallelogramm und am Querträger angekoppelt werden.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht eines Ackerschleppers mit einer Sämaschine, und

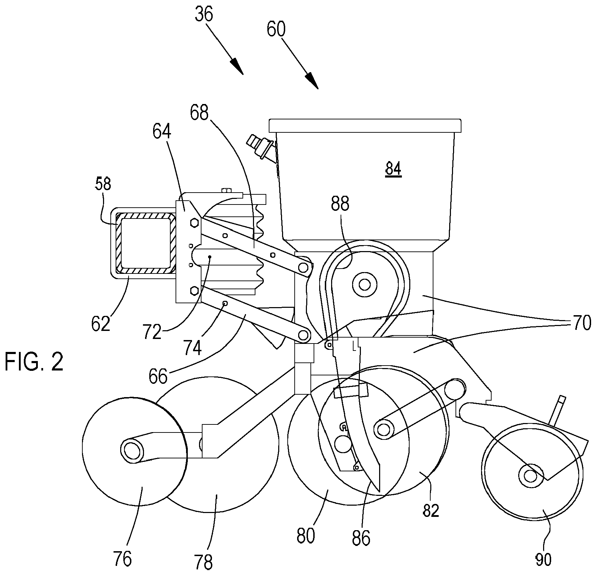

- Fig. 2: eine vergrößerte Ansicht der Sämaschine.

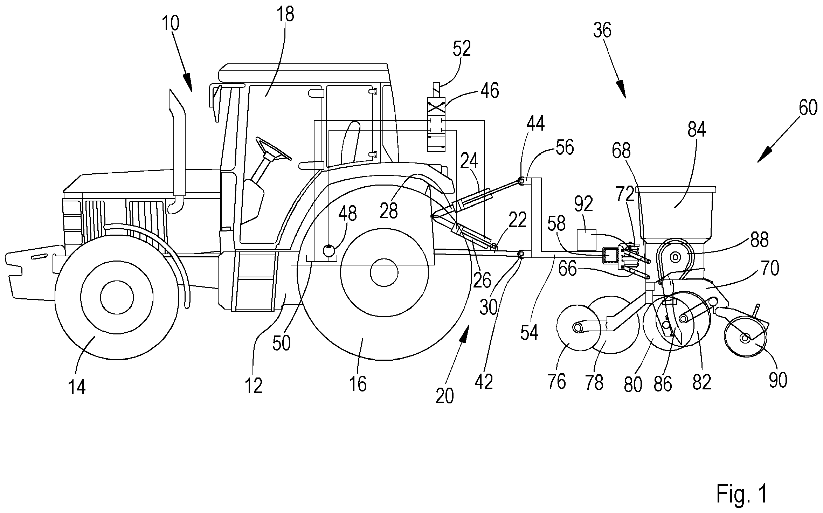

In der Figur 1 ist ein Ackerschlepper 10 dargestellt, der sich auf einem Fahrgestell 12 aufbaut und durch vordere, lenkbare Räder 14 und antreibbare, rückwärtige Räder 16 auf dem Boden abstützt. Ein Bedienerarbeitsplatz befindet sich in einer Kabine 18. Am rückwärtigen Ende des Fahrgestells 12 ist eine Dreipunktkupplung 20 angeordnet, die sich
aus zwei nebeneinander angeordneten Unterlenkern 22 und einem darüber angebrachten Oberlenker 28 zusammensetzt. Die Unterlenker 22 sind durch zugehörige, doppelt wirkende Hydraulikzylinder 26 höhenverstellbar, welche die Unterlenker 22 um ihre Anlenkpunkte am Fahrgestell 12 um horizontale, etwa quer zur Vorwärtsrichtung orientierte Achsen verschwenken. Der Oberlenker 28 ist als Hydraulikzylinder 24 ausgeführt und demnach längenveränderbar. Durch Verstellung der Hydraulikzylinder 26 können rückwärtige Koppelpunkte 30 der Unterlenker 22 in eine zum Anbringen der Sämaschine 36 geeignete Position gebracht werden. Durch Verstellung der Länge des Oberlenkers 28, die anstelle durch den Hydraulikzylinder 24 auch rein mechanisch durch den Bediener von Hand mittels einer geeigneten Schraubspindel erfolgen könnte, kann ein rückwärtiger Koppelpunkt 32 des Oberlenkers 28 in eine zum Anbringen der Sämaschine 36 geeignete Position gebracht werden. Am rückwärtigen Ende der Unterlenker 22 sind in an sich bekannter Weise Unterlenker-Koppelpunkte 30 in Form von sich nach oben erstreckenden Fanghaken (oder beliebiger anderer Koppelpunkte, z. B. Koppelaugen, wie sie in der DIN ISO 730-1 Landmaschinen und Traktoren - Heck-Dreipunktanbau - Teil 1: Kategorien 1, 2, 3 und 4 beschrieben werden) angeordnet, während am rückwärtigen Ende des Oberlenkers 28 ein ebenfalls konventioneller Oberlenker-Koppelpunkt 32 vorgesehen ist.

Die doppelt wirkenden Hydraulikzylinder 26 der Unterlenker 22 sind mit einem Ventil 46 verbunden, das wiederum mit einem Vorratsbehälter 50 für Hydraulikfluid und einer vom Verbrennungsmotor des Ackerschleppers 10 angetriebenen Pumpe 48 gekoppelt ist. Das Ventil 46 kann mit beiden Hydraulikzylindern 26 verbunden sein oder jedem Hydraulikzylinder wird ein eigenes Ventil 46 zugeordnet. Das Ventil 46 ist in eine geschlossene Stellung verbringbar, wie dargestellt, und in eine Absenkstellung, wenn es in der Figur 1 nach oben hin verstellt wird, und in eine Hubstellung, wenn es in der Figur 1 nach unten hin verstellt wird. Das Ventil 46 kann manuell vom Bediener in der Kabine 18 oder durch geeignete elektromagnetische Aktoren 52 betätigt werden, die wiederum durch in der Kabine 18 angeordnete Schalter oder eine Vorgewendeautomatik (nicht gezeigt) betätigt werden. In der in Figur 1 gezeigten Stellung des Ventils 46 ist der Unterlenker 22 in sich blockiert und somit arretiert. Der Hydraulikzylinder 24 des Oberlenkers 28 dient nur zur einmaligen, anfänglichen Einstellung der Position des Koppelpunkts 32 und wird während des Feldbetriebs nicht verstellt, sondern ist dann (wie die Hydraulikzylinder 26 des Unterlenkers 22 in der Figur 1 anhand des Ventils 46 gezeigt) in sich blockiert. Am Feldende kann die Sämaschine 36 ausgehoben werden, indem das Ventil 46 durch den Bediener oder die Vorgewendeautomatik in die Hubstellung gebracht wird, und vor dem Bearbeiten der nächsten Spur analog wieder abgesenkt werden, indem das Ventil 46 durch den Bediener oder die Vorgewendeautomatik in die Absenkstellung gebracht wird. Dadurch werden die Unterlenker 22 durch die Hydraulikzylinder 26 angehoben und wieder abgesenkt, wodurch auch die Sämaschine 36 angehoben und abgesenkt wird.

Die Sämaschine 36 umfasst ein Haltegestell 54, das durch untere Laschen 40 und Bolzen 42 an den Unterlenker-Kopplungspunkten 30 der Unterlenker 22 und durch ein oberes Halterungselement 56 und einen Bolzen 44 am Oberlenker-Koppelpunkt 32 befestigt ist. An dem Haltegestell 54 ist ein Querträger 58 befestigt, der sich über die ganze Breite der Sämaschine 36 erstreckt und an dem seitlich nebeneinander eine Anzahl von Säeinheiten 60 befestigt sind. Die Befestigung der Säeinheiten 60 am Querträger 58 erfolgt über U-förmige Halterungen 62, die mit einer Konsole 64 verbunden sind, die sich vertikal an der Rückseite des Querträgers 58 erstreckt und an der übereinander zwei Lenker 66, 68 angelenkt sind, die außerdem jeweils an einem Gestell 70 der Säeinheit 60 angelenkt sind. Die Lenker 66, 68 bilden mit der Konsole 64 und dem Gestell 70 ein verstellbares Parallelogramm, das die Höhe des Gestells 70 über dem Boden definiert. Ein als Vorspannmittel dienender pneumatischer Aktor 72, der in der dargestellten Ausführungsform als pneumatischer Balgzylinder ausgeführt ist, greift einerseits oben an der Konsole 64 und andererseits unten am unteren Lenker 66 (am Punkt 74) an und definiert die Position des Gestells 70 und die Andruckkraft, mit der am Gestell 70 abgestützte Furchenöffner 78, 80 mit dem Erdboden zusammenwirken. Der Druck im pneumatischen Aktor 72 wird durch eine pneumatische Kontrolleinrichtung 92 vorgegeben, die einen Kompressor und ein Druckregelventil umfassen kann. Anstelle des pneumatischen Aktors 72 könnte auch ein Hydraulikzylinder (nicht gezeigt) verwendet werden.

Das Gestell 70 trägt in an sich bekannter Weise einen Saatgutbehälter 84, ein Säschar 86 sowie eine (insbesondere pneumatische, mit von einem nicht gezeigten Gebläse bereitgestellten Unterdruck arbeitende) Zumesseinrichtung 88, die nach und nach einzelne Körner des Saatguts aus dem Saatgutbehälter 84 in das Säschar 86 abgibt, welches es in eine Furche ablegt, die durch den Furchenöffner 80 erzeugt wird, dessen Arbeitstiefe durch ein Tiefeneinstellrad 82 vorgegeben wird. Die Furche wird durch ein Schließrad 90 geschlossen. Eine weitere Furche kann durch einen Furchenöffner 78 erzeugt werden, dessen Arbeitstiefe durch ein Tiefeneinstellrad 76 vorgegeben wird. Diese weitere Furche kann zur Aufnahme von Düngemitteln durch ein weiteres, nicht gezeigtes Schar dienen und ebenfalls durch das Schließrad 90 geschlossen werden. Hinsichtlich weiterer Einzelheiten der Säeinheiten 60 wird auf die Offenbarung der EP 2 517 545 A1 verwiesen, deren Offenbarung durch Verweis mit in die vorliegenden Unterlagen aufgenommen wird.

Die Sämaschine 36 stützt sich nur an der Dreipunktkupplung 20 und auf den Tiefeneinstellrädern 80 der Säeinheiten 60, jedoch nicht auf ihr zugeordneten Stützrädern auf dem Erdboden ab. Wie bereits erwähnt, eignet sich die Sämaschine 36 zur Direktsaat, d.h. zum Arbeiten auf nach der vorherigen Ernte nicht oder nur geringfügig mit Bodenbearbeitungsmaschinen bearbeiteten Feldern. Der Furchenöffner 80 benötigt daher eine hinreichend große Andruckkraft, um auf dem Feld evtl. vorhandene Materialien wie Pflanzenstängel und -stoppel durchtrennen zu können. Da die eigentliche Sämaschine 36 nur relativ leicht gebaut ist und nur wenige und leichte Elemente aufweist, stützt sich der Furchenöffner 80 im Betrieb über das Gestell 70, an dem er drehbar aufgehängt ist, den unteren Lenker 66, den pneumatischen Aktor 72, die Konsole 64, die Halterungen 62, den Querträger 58, das Haltegestell 54, sowie die Unter- und Oberlenker 22, 28 und die Hydraulikzylinder 26 der Unterlenker 22 am Fahrgestell 12 des Ackerschleppers 10 ab. Die Hinterachse des Ackerschleppers 10 wird somit entlastet und die Vorderachse belastet. Im Ergebnis erübrigen sich separate Ballastgewichte, die ansonsten (d.h. ohne die erfindungsgemäß vorgesehene starre Anbindung der Sämaschine 36 an den Ackerschlepper 10) erforderlich wären, um die Sämaschine 36 zur Bereitstellung einer für den Direktsaatbetrieb nötigen Andruckkraft zu ballastieren.

Die Andruckkraft des Furchenöffners 80 wird durch den pneumatischen Aktor 72 vorgegeben und ist mittels der durch den Bediener aus der Kabine 18 über eine Schnittstelle (z.B. virtuelles Terminal, nicht gezeigt) und eine Busleitung (nicht gezeigt) kontrollierbaren pneumatischen Kontrolleinrichtung 92 oder eine Automatik zur Anpassung an die jeweiligen Gegebenheiten auf dem Feld veränderbar. Der pneumatische Aktor 72 könnte auch durch eine Feder (nicht gezeigt) ersetzt oder ergänzt werden, die ihm parallel geschaltet wird.

Es ist anzumerken, dass noch weitere Verfeinerungen der Sämaschine 36 denkbar wären. So könnte der Querträger 58 sich aus mehreren Abschnitten zusammensetzen, was es ermöglicht, äußere Abschnitte mit daran angebrachten Säeinheiten 70 in eine nach oben und innen versetzte Außerbetriebsposition für eine Straßenfahrt zu verbringen. An der Vorderseite des Ackerschleppers 10 könnte ein Düngemittelbehälter angebracht werden, dessen Inhalt durch geeignete, an sich bekannte pneumatische Fördermittel sukzessive in die oben erwähnte, weitere Furche eingebracht wird.

## Patentansprüche

1. Kombination aus einem Ackerschlepper (10) und einer am Ackerschlepper (10) angebrachten, zur Direktsaat geeigneten Sämaschine (36), wobei:
die Sämaschine (36) einen Querträger (58) aufweist, an dem mehrere Säeinheiten (60) seitlich nebeneinander angebracht sind,
die Säeinheiten (60) jeweils ein Gestell (70) umfassen, das gegenüber dem Querträger (58) durch einen druckmittelbetätigten Aktor (72) umfassende Vorspannmittel nach unten vorgespannt ist und an dem ein Saatgutbehälter (84), ein Furchenöffner (80), ein Tiefeneinstellrad (82), ein Säschar (86) und eine Zumesseinrichtung (88) angebracht sind,
und die Zumesseinrichtung (88) eingerichtet ist, sukzessive Saatgut aus dem Saatgutbehälter (84) zu entnehmen und dem Säschar (86) zuzuführen, welches es in eine durch den Furchenöffner (80) erzeugte Furche abgibt, deren Tiefe durch das Tiefeneinstellrad (82) vorgegeben wird,
wobei der Querträger (58) der Sämaschine (36) an einer Dreipunktkupplung (20) des Ackerschleppers (10) angebracht ist und die Dreipunktkupplung (20) einen durch einen doppelt wirkenden Hydraulikzylinder (26) höhenverstellbaren Unterlenker (28) umfasst und beim Säbetrieb die Andruckkräfte der Furchenöffner (78, 80) über die Säeinheiten (60), das Gestell (70), die Vorspannmittel, den Querträger (58) und die Dreipunktkupplung (20) in das Fahrgestell (12) des Ackerschleppers (10) eingeleitet werden, während die Sämaschine (36) sich nur an der Dreipunktkupplung (20) und den Tiefeneinstellrädern (82) der Säeinheiten (60) auf dem Erdboden abstützt,
**dadurch gekennzeichnet, dass** die Dreipunktkupplung (20) gegenüber dem Fahrgestell (12) des Ackerschleppers (10) in sich arretierbar ist, wozu der Hydraulikzylinder (26) im Säbetrieb durch ein Ventil (46) in sich blockierbar ist,
dass die druckmittelbetätigten Aktoren (72) in Form von pneumatischen, mit vorbestimmbarem Druck beaufschlagbaren Zylindern ausgeführt sind
und dass die durch den pneumatischen Aktor (72) vorgegebene Andruckkraft des Furchenöffners (80) mittels einer durch einen Bediener aus einer Kabine (18) des Ackerschleppers (10) über eine Schnittstelle und eine Busleitung kontrollierbaren pneumatischen Kontrolleinrichtung (92) oder eine Automatik zur Anpassung an die jeweiligen Gegebenheiten auf dem Feld veränderbar ist.

2. Kombination nach Anspruch 1, wobei das Gestell (70) durch ein zwei Lenker (66, 68) umfassendes, verstellbares Parallelogramm am Querträger (58) befestigt ist und die Vorspannmittel am Parallelogramm und am Querträger angekoppelt sind.

## Claims

1. Combination of an agricultural tractor (10) and a sowing machine (36) which is attached to the agricultural tractor (10) and is suitable for direct sowing, wherein:
the sowing machine (36) has a crossmember (58), on which a plurality of sowing units (60) are mounted laterally next to one another,
the sowing units (60) each comprise a framework (70) which is prestressed downwards in relation to the crossmember (58) by prestressing means comprising an actuator (72) actuated by pressure medium, and on which a feed container (84), a furrow opener (80), a depth gauge wheel (82), a sowing coulter (86) and a metering device (88) are mounted,
and the metering device (88) is configured to remove successive seeds from the seed container (84) and to feed the seeds to the sowing coulter (86) which discharges the seeds into a furrow, which is produced by the furrow opener (80) and the depth of which is predetermined by the depth gauge wheel (82),
wherein the crossmember (58) of the sowing machine (36) is mounted on a three-point coupling (20) of the agricultural tractor (10), and the three-point coupling (20) comprises a lower link (28) which can be adjusted in height by means of a double-action hydraulic cylinder (26), and, during the sowing mode, the pressing forces of the furrow openers (78, 80) are introduced via the sowing units (60), the framework (70), the prestressing means, the crossmember (58) and the three-point coupling (20) into the chassis (12) of the agricultural tractor (10), while the sowing machine (36) is supported on the ground only at the three-point coupling (20) and the depth gauge wheels (82) of the sowing units (60),
**characterized in that** the three-point coupling (20) is lockable per se in relation to the chassis (12) of the agricultural tractor (10), for which purpose the hydraulic cylinder (26) is blockable per se by a valve (46) during the sowing mode,
**in that** the actuators (72) which are actuated by pressure medium are designed in the form of pneumatic cylinders which can be subjected to a predeterminable pressure,
and **in that** the pressing force of the furrow opener (80), which is predetermined by the pneumatic actuator (72), can be varied by means of a pneumatic control device (92), which is controllable by an operator from a cab (18) of the agricultural tractor (10) via an interface and a bus line, or by an automatic mechanism for adaptation to the respective circumstances in the field.

2. Combination according to Claim 1, wherein the framework (70) is fastened to the crossmember (58) by an adjustable parallelogram comprising two links (66, 68), and the prestressing means are coupled to the parallelogram and to the crossmember.

## Revendications

1. Combinaison d'un tracteur agricole (10) et d'un semoir (36) monté sur le tracteur agricole (10) et adapté pour un semis direct,
le semoir (36) possédant une traverse (58) sur laquelle plusieurs unités d'ensemencement (60) sont disposées latéralement les unes à côté des autres,
les unités d'ensemencement (60) comportant respectivement un bâti (70) qui est précontraint vers le bas par rapport à la traverse (58) par un moyen de précontrainte qui comprend un actionneur (72) actionné par un flux sous pression et sur lequel sont montés un réservoir à semences (84), un soc traceur de sillon (80), une roue de réglage de profondeur (82), un soc d'ensemencement (86) et un dispositif de dosage (88),
et le dispositif de dosage (88) étant conçu pour prélever successivement des semences dans le réservoir à semences (84) et les acheminer au soc d'ensemencement (86), lequel les distribue dans un sillon produit par le soc traceur de sillon (80) dont la profondeur est prédéfinie par la roue de réglage de profondeur (82),
la traverse (58) du semoir (36) étant montée sur un attelage à trois points (20) du tracteur agricole (10) et l'attelage à trois points (20) comportant un bras oscillant inférieur (28) réglable en hauteur par un vérin hydraulique (26) à double effet et, en régime d'ensemencement, les forces de pressage des socs traceurs de sillon (78, 80) étant exercées dans le châssis de roulement (12) du tracteur agricole (10) par le biais des unités d'ensemencement (60), du bâti (70), du moyen de précontrainte, de la traverse (58) et de l'attelage à trois points (20), alors que le semoir (36) ne prend appui sur le sol qu'au niveau de l'attelage à trois points (20) et des roues de réglage de profondeur (82) des unités d'ensemencement (60),
**caractérisée en ce que** l'attelage à trois points (20) peut être bloqué en lui-même par rapport au châssis de roulement (12) du tracteur agricole (10), le vérin hydraulique (26) pouvant à cet effet être bloqué en lui-même par une vanne (46) en régime d'ensemencement,
**en ce que** les actionneurs (72) actionnés par un flux sous pression sont réalisés sous la forme de vérins pneumatiques qui peuvent être chargés avec une pression prédéterminée,
et **en ce que** la force de pressage du soc traceur de sillon (80), prédéfinie par l'actionneur pneumatique (72), peut être modifiée au moyen d'un dispositif de commande pneumatique (92) qui peut être commandé par un opérateur depuis une cabine (18) du tracteur agricole (10) par le biais d'une interface et d'une ligne de bus, ou d'un système automatique en vue de l'adaptation aux conditions en présence sur le terrain.

2. Combinaison selon la revendication 1, le bâti (70) étant fixé à la traverse (58) par un parallélogramme réglable comportant deux bras oscillants (66, 68) et les moyens de précontrainte étant accouplés au parallélogramme et à la traverse.
